# EUROPEAN PATENT SPECIFICATION

(11) **EP 2 717 195 B1**
(45) Date of publication and mention of the grant of the patent: **25.04.2018**
(21) Application number: 13004702.0
(22) Date of filing: 27.09.2013
(51) Int. Cl.: G06K 19/07, G06F 21/34, G06Q 30/00, G06Q 10/08

(54) **Counterfeit detection**
Fälschungserkennung
Détection de contrefaçon

(30) Priority: 08.10.2012 IN CH41712012; 01.03.2013 US 201313782043
(43) Date of publication of application: 09.04.2014
(73) Proprietor: Accenture Global Services Limited, Dublin 4 (IE)
(72) Inventor: Paul, Sanjoy, 560102 Bangalore (IN); Singh, Gurdeep, 560037 Bangalore (IN); Sharma, Sankalp, 560037 Bangalore (IN)
(74) Representative: Müller-Boré & Partner Patentanwälte PartG mbB

(56) References cited:
- WO-A1-97/25798
- WO-A2-2009/074866
- CN-A- 101 561 863
- DE-A1-102006 016 830
- US-A1- 2009 283 583
- Anonymous: "Padding (cryptography) - Wikipedia, the free encyclopedia", , 28 September 2012 (2012-09-28), XP055154479, Retrieved from the Internet: URL:http://en.wikipedia.org/w/index.php?ti tle=Padding_(cryptography)&oldid=515078455 [retrieved on 2014-11-24]

## Description

### BACKGROUND

The presence of counterfeit products in a market can negatively impact the value of authentic products. For customers desiring to purchase authentic products, the presence of counterfeit products can deter such customers from purchasing products that may in fact be authentic or lead to the undesirable purchase of counterfeit products. While measures, such as, for example, limiting retailers that may sell a product can be taken to guarantee authenticity of a product, such measures can be bypassed or prove to be ineffective for certain products. Such measures can also prove to be ineffective for customers who may question the authenticity of a retailer.

Document WO 2009/074866 A2 relates to a verification arrangement comprising an article carrying an alphanumeric article identification code and a verification entity storing a number of approved identification codes and being adapted in such a manner that upon input of the article identification code by the user, the verification entity outputs a response indicating whether the input article identification code is identical to one of the stored approved identification codes.

### BRIEF DESCRIPTION OF DRAWINGS

Features of the present disclosure are illustrated by way of examples shown in the following figures. In the following figures, like numerals indicate like elements, in which:
Figure 1 illustrates an architecture of a counterfeit detection system, according to an example of the present disclosure;
Figure 2 illustrates a layout for generation of a hybrid XID, according to an example of the present disclosure;
Figure 3 illustrates a validation layout for a client XID check, according to an example of the present disclosure;
Figure 4 illustrates a validation layout for a server XID format check, according to an example of the present disclosure;
Figure 5 illustrates a validation layout for a server XID existence check, according to an example of the present disclosure;
Figure 6 illustrates a validation layout for an automated image characteristics check, according to an example of the present disclosure;
Figure 7 illustrates a validation layout for a location check, according to an example of the present disclosure;
Figure 8 illustrates another validation layout for a location check, according to an example of the present disclosure;
Figure 9 illustrates a validation layout for a sale based check, according to an example of the present disclosure;
Figure 10 illustrates a layout for a database update, according to an example of the present disclosure;
Figure 11 illustrates a method for counterfeit detection, according to an example of the present disclosure; and
Figure 12 illustrates a computer system, according to an example of the present disclosure.

### DETAILED DESCRIPTION

For simplicity and illustrative purposes, the present disclosure is described by referring mainly to examples. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure.

Throughout the present disclosure, the terms "a" and "an" are intended to denote at least one of a particular element. As used herein, the term "includes" means includes but not limited to, the term "including" means including but not limited to. The term "based on" means based at least in part on.

### 1. Overview

A counterfeit detection system is described herein and generally includes a memory storing a module comprising machine readable instructions to determine a X-identification (XID) associated with a product. The XID may include an unencrypted component and/or an encrypted component associated with a parameter associated with the product. The parameter may include, for example, a characteristic of the product, a location of the product etc. The machine readable instructions may further include selecting one or more validation rules, from a plurality of validation rules, to select one or more validation techniques from a plurality of validation techniques used to determine an authenticity of the product. The machine readable instructions may further include using the one or more selected validation techniques to determine the authenticity of the product based on the XID associated with the product. The counterfeit detection system may include a processor to implement the module.

A method for counterfeit detection is described herein and generally includes determining a XID associated with a product. The method may further include selecting one or more validation rules, from a plurality of validation rules, to select one or more validation techniques from a plurality of validation techniques used to determine an authenticity of the product. The method may also include using, by a processor, the one or more selected validation techniques to determine the authenticity of the product based on the XID associated with the product.

A non-transitory computer readable medium is described herein and includes stored thereon machine readable instructions for counterfeit detection. The machine readable instructions when executed cause a computer system to determine a XID associated with a product. The machine readable instructions may further include selecting one or more validation rules, from a plurality of validation rules, to select one or more validation techniques from a plurality of validation techniques used to determine an authenticity of the product. The machine readable instructions may further include using, by a processor, the one or more selected validation techniques to determine the authenticity of the product based on the XID associated with the product.

The system and method described herein provide a technical solution to the technical problem of counterfeit detection. In many instances, manual counterfeit detection is not a viable solution given the number of available counterfeit products on the market, and sophisticated counterfeiting techniques. The system and method described herein provide the technical solution of objectively and automatically determining whether a product is authentic or a counterfeit based on evaluation of unencrypted and/or encrypted components of a XID associated with a product. The system and method described herein further provide the technical solution of objectively and automatically determining whether a product is authentic or a counterfeit by selecting one or more validation rules, from a plurality of validation rules, to select one or more validation techniques from a plurality of validation techniques used to determine an authenticity of the product, and using the one or more selected validation techniques to determine the authenticity of the product based on the XID associated with the product. The system and method described herein also provide the technical solution of objectively and automatically updating the one or more selected rules based on analysis of data from the authenticity determination of the product, and determining the authenticity of the product at a mobile device or at a server environment based, for example, on a counterfeit probability.

### 2. System

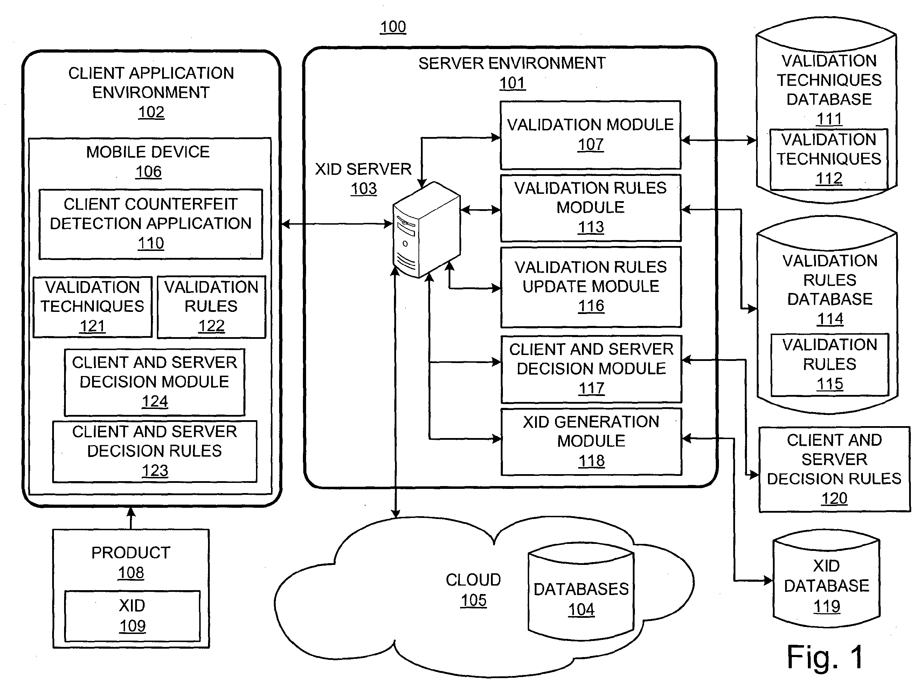

Figure 1 illustrates an architecture of a counterfeit detection system 100, according to an example of the present disclosure. The counterfeit detection system 100 may generally include a server environment 101 and a client application environment 102. The server and client application environments 101, 102 may be combined into an autonomous system, or disposed separately as shown, for example, for facilitating remote operation and reducing storage and processing requirements of the client application environment 102. The server environment 101 may include a XID server 103 that may communicate with further servers (not shown) and databases 104 in a cloud 105. The client application environment 102 may include a mobile device 106, such as, for example, a personal digital assistant (PDA), a smart phone, a tablet or a remote personal computer (PC). The server environment 101 may generally include a validation module 107 to validate authenticity of a product 108, such as, for example, food, clothing or electronic merchandise that include a XID 109. The XID 109 may be a code that includes information, such as, for example, a manufacturer name, a merchandise name, a product size, a product color, a product price, and location (i.e., geographic information) of a product. A client counterfeit detection application 110 on the mobile device 106 may read the XID 109, look up an appropriate rule and trigger an appropriate validation technique as described herein. The validation module 107 may use a validation techniques database 111 to store, retrieve and update a plurality of validation techniques 112. The validation module 107 may dynamically determine one or more of the validation techniques 112 that are suitable to determine authenticity of the product 108. A validation rules module 113 may use a validation rules database 114 to store, retrieve and update a plurality of validation rules 115. The validation rules module 113 may use appropriate validation rules 115 based on which one or more of the foregoing validation techniques 112 is chosen by the validation module 107. The validation rules 115 may be based on factors, such as, for example, a manufacturer name, a type of merchandise (i.e., product), price of merchandise, etc. A validation rules update module 116 is to dynamically update the validation rules 115 based on analysis of counterfeit data. A client and server decision module 117 is to use client and server decision rules 120 to dynamically determine whether to validate authenticity of the product 108 in the server environment 101, or the client application environment 102, or a combination thereof. A XID generation module 118 is to generate the XID 109 that is applied to the product 108 and used for product authentication. The XIDs 109 may be stored in a XID database 119 for processing as described herein.

As described herein, the modules and other elements of the system 100 may comprise machine readable instructions stored on a non-transitory computer readable medium. In addition, or alternatively, the modules and other elements of the system 100 may comprise hardware or a combination of machine readable instructions and hardware.

Referring to Figure 1, the validation module 107 may dynamically determine one or more validation techniques 112 that are suitable to determine authenticity of the product 108. A first example of the validation technique 112 may be based on part of a XID, where an authenticity check may be performed by the mobile device 106 including a mobile version of the validation module 107 and the validation rules module 113 (i.e., validation and rules modules on the mobile device 106). For a second example of the validation technique 112, a validation technique may be based on a complete XID, where an authenticity check may be performed by the mobile device 106 using the server environment 101. For a third example of the validation technique 112, a validation technique may be based on existence of a correctly formatted XID, where an authenticity check may be performed by the mobile device 106 using the server environment 101. For a fourth example of the validation technique 112, a validation technique may be based on a location of the product 108, where an authenticity check may be performed by the mobile device 106 using the server environment 101. For a fifth example of the validation technique 112, a validation technique may be based on a sale of the product 108, where an authenticity check may be performed by the mobile device 106 using the server environment 101. For a sixth example of the validation technique 112, a validation technique may be based on physical characteristics of the product 108, where an authenticity check may be performed by the mobile device 106 using the server environment 101 and input from a user of the mobile device 106. For a seventh example of the validation technique 112, a validation technique may be based on physical characteristics of the product 108, where an authenticity check may be performed by the mobile device 106 using the server environment 101 and no input from the user of the mobile device 106 (i.e., automatically using the server environment 101). For an eighth example of the validation technique 112, a validation technique may be based on a hidden pattern provided for the product 108, where an authenticity check may be performed by the mobile device 106 using the server environment 101 and no input from the user of the mobile device 106 (i.e., automatically using the server environment 101). The foregoing validation techniques 112 may be designated Validation #1 - #8 for facilitating an explanation of use of the validation techniques 112. One of skill in the art will appreciate that other validation techniques not disclosed may be used without departing from the scope of the disclosure.

The validation rules module 113 may use appropriate validation rules 115 based on which one or more of the foregoing validation techniques 112 is chosen by the validation module 107. The validation rules 115 may be used based on a variety of factors, such as, for example, a parameter associated with the product 108, a characteristic of the product 108, a business relationship between two entities (e.g., a vendor and a XID service provider, or a vendor and a consumer, etc.). For example, for a clothing product, Validation #1 - #8 may be used, whereas for certain food (e.g., wine) products, Validation #1 - #6 may be used. Using the example of a clothing product, such as, for example, a shirt, a sample set of the validation rules 115 may include:
1. If the Manufacturer = XYZ, Merchandise = PQR and Price < $X, then use Validation #1.
2. If the Manufacturer = ABC, Merchandise = DEF and Price > $X, then use Validation #1-3.
3. If the Manufacturer = XYZ, Merchandise = PQR and Price > $Y, then use Validation #1-6.
4. If the Manufacturer = ABC, Merchandise = DEF and Price > $Z, then use Validation #1-8.
One of skill in the art will appreciate that other rules not disclosed may be used without departing from the scope of the disclosure.

The validation rules update module 116 is to dynamically update the validation rules 115 based on analysis of counterfeit data. For example, if the number of counterfeits for a given manufacturer, merchandise and price (e.g., price > $X) for a product 108 is greater than a predetermined threshold (e.g., 10 counterfeits), then a rule may be inserted to use different combinations of the validation techniques 112. For example, the validation rules update module 116 may include the following specifications:

```
     If the number of counterfeits for [Manufacturer XYZ, Merchandise PQR,
     Price > $X] > Threshold_MMP1 then
          Insert the rule: If the Manufacturer = XYZ, Merchandise=PQR,
     Price>$X then use Validation #1-3
     Else-if the number of counterfeits for [Manufacturer XYZ, Merchandise PQR,
     Price > $Y] > Threshold_MMP_2 then
          Insert the rule: If the Manufacturer = XYZ, Merchandise=PQR,
P     rice>$Y then use Validation #1-6
     Else-if the number of counterfeits for [Manufacturer XYZ, Merchandise PQR,
     Price > $Z] > Threshold_MMP_3 then
          Insert the rule: If the Manufacturer = XYZ, Merchandise=PQR,
     Price>$Z then use Validation #1-8.
```

For the foregoing example of the specifications of the validation rules update module 116, MMP may refer to the combination manufacturer (M), merchandise (M) and price (P), and Threshold_MMP_may refer to a threshold associated with the combination of manufacturer, merchandise and price. The validation rules 115 may be updated at predetermined intervals (e.g., hourly) based, for example, on product specifications or manufacturer requirements.

In another example, the validation rules update module 116 may include the following specifications:

```
     If the number of counterfeits for [Manufacturer XYZ, Merchandise PQR] >
     Threshold_MM_1 then
          Insert the rule: If the Manufacturer = XYZ, Merchandise=PQR then
     use Validation #1-3
     Else-if the number of counterfeits for [Manufacturer XYZ, Merchandise PQR]
     > Threshoid_MM_2 then
          Insert the rule: If the Manufacturer = XYZ, Merchandise=PQR then
     use Validation #1-6
     Else-if the number of counterfeits for [Manufacturer XYZ, Merchandise PQR]
     > Threshold_MM_3 then
          Insert the rule: If the Manufacturer = XYZ, Merchandise=PQR then
     use Validation #1-8
```

In another example, the validation rules update module 116 may include the following specifications:

```
     If the number of counterfeits for Manufacturer XYZ > Threshold_M_1 then
          Insert the rule: If the Manufacturer = XYZ, then use Validation #1-3
     Else-if the number of counterfeits for Manufacturer XYZ > Threshold_M_2
     then
          Insert the rule: If the Manufacturer = XYZ, then use Validation #1-6
     Else-if the number of counterfeits for Manufacturer XYZ > Threshold_M_3
     then
          Insert the rule: If the Manufacturer = XYZ, then use Validation #1-8
```

The validation rules 115 may be either locally updated at the mobile device 106 or updated and pushed by the server environment 101 to the mobile device 106.

In order to compute the number of counterfeits used by the validation rules update module 116 to dynamically alter the validation rules 115 or a set of the validation rules 115 used for a product 108, the validation rules update module 116 may include a counter that is incremented. For example, the validation rules update module 116 may increment the counter as follows:

```
     If a counterfeit is detected for [Manufacturer XYZ, Merchandise PQR, Price
     > $X] > then
          Increment the count corresponding to [Manufacturer = XYZ,
     Merchandise=PQR, Price>$X]
     Else-if a counterfeit is detected for [Manufacturer XYZ, Merchandise PQR,
     Price > $Y] > then
          Increment the count corresponding to [Manufacturer = XYZ,
     Merchandise=PQR, Price>$Y]
     Else-if a counterfeit is detected for [Manufacturer XYZ, Merchandise PQR,
     Price > $Z] > then
          Increment the count corresponding to [Manufacturer = XYZ,
     Merchandise=PQR, Price>$Z]
```

In another example, the validation rules update module 116 may increment the counter as follows:

```
     If a counterfeit is detected for [Manufacturer XYZ, Merchandise PQR] > then
          Increment the count corresponding to [Manufacturer = XYZ,
     Merchandise=PQR]
```

In another example, the validation rules update module 116 may increment the counter as follows:

```
     If a counterfeit is detected for [Manufacturer XYZ] > then
          Increment the count corresponding to [Manufacturer = XYZ]
```

The validation rules 115 may be based on a variety of other factors, such as, for example, geography or physical characteristics, such as, for example, size or color associated with a product. These aspects may be chosen based on the counterfeit potential of a product 108 or based on historical analysis. For example, for the validation rules 115 based on geography, the validation rules update module 116 may include the following specifications:

```
     If the number of counterfeits for [Manufacturer XYZ, Merchandise PQR,
     Price > $X, Geo = A] > Threshold_MMPG_1 then
          Insert the rule: If the Manufacturer = XYZ, Merchandise=PQR,
     Price>$X, Geo=A then use Validation #1-3
     Else-if the number of counterfeits for [Manufacturer XYZ, Merchandise PQR,
     Price > $Y, Geo=A] > Threshoid_MMPG_2 then
          Insert the rule: If the Manufacturer = XYZ, Merchandise=PQR,
     Price>$Y, Geo=A then use Validation #1-6
     Else-if the number of counterfeits for [Manufacturer XYZ, Merchandise PQR,
     Price > $Z, Geo=A] > Threshold_MMPG_3 then
          Insert the rule: If the Manufacturer = XYZ, Merchandise=PQR,
     Price>$Z, Geo=A then use Validation #1-8
```

For the foregoing example of the specifications of the validation rules update module 116 for the validation rules 115 based on geography, Threshold_MMPG may refer to a threshold associated with the combination of manufacturer (M), merchandise (M), price (P), and geography (G).

In another example, for the validation rules 115 based on size, the validation rules update module 116 may include the following specifications:

```
     If the number of counterfeits for [Manufacturer XYZ, Merchandise PQR,
     Price > $X, Size = S] > Threshold_MMPS_1 then
          Insert the rule: If the Manufacturer = XYZ, Merchandise=PQR,
     Price>$X, Size=S then use Validation #1-3
     Else-if the number of counterfeits for [Manufacturer XYZ, Merchandise PQR,
     Price > $Y, Size =S] > Threshold_MMPS_2 then
          Insert the rule: If the Manufacturer = XYZ, Merchandise=PQR,
     Price>$Y, Size = S then use Validation #1-6
     Else-if the number of counterfeits for [Manufacturer XYZ, Merchandise PQR,
     Price > $Z, Size = S] > Threshold_MMPS_3 then
          Insert the rule: If the Manufacturer = XYZ, Merchandise=PQR,
     Price>$Z, Size=S then use Validation #1-8
```

For the foregoing example of the specifications of the validation rules update module 116 for the validation rules 115 based on size, Threshold_MMPS may refer to a threshold associated with the combination of manufacturer (M), merchandise (M), price (P), and size (S).

In another example, for the validation rules 115 based on color, the validation rules update module 116 may include the following specifications:

```
     If the number of counterfeits for [Manufacturer XYZ, Merchandise PQR,
     Price > $X, Color=B] > Threshold_MMPC_1 then
          Insert the rule: If the Manufacturer = XYZ, Merchandise=PQR,
     Price>$X, Color=B then use Validation #1-3
     Else-if the number of counterfeits for [Manufacturer XYZ, Merchandise PQR,
     Price > $Y, Color=B] > Threshold_MMPC_2 then
          Insert the rule: If the Manufacturer = XYZ, Merchandise=PQR,
     Price>$Y, Color=B then use Validation #1-6
     Else-if the number of counterfeits for [Manufacturer XYZ, Merchandise PQR,
     Price > $Z, Color=B] >Threshold_MMPC_3 then
          Insert the rule: If the Manufacturer = XYZ, Merchandise=PQR,
     Price>$Z, Color=B then use Validation #1-8
```

For the foregoing example of the specifications of the validation rules update module 116 for the validation rules 115 based on color, Threshold_MMPC may refer to a threshold associated with the combination of manufacturer (M), merchandise (M), price (P), and color (C).

In order to compute the number of counterfeits used by the validation rules update module 116 to dynamically alter the rules set including the validation rules 115, for the validation rules 115 based on geography, the validation rules update module 116 may include the following specifications:

```
     If a counterfeit is detected for [Manufacturer XYZ, Merchandise PQR, Price
     > $X, Geo=A] then
          Increment the count corresponding to [Manufacturer = XYZ,
     Merchandise=PQR, Price>$X, Geo=A]
     Else-if a counterfeit is detected for [Manufacturer XYZ, Merchandise PQR,
     Price > $Y, Geo=A] then
          Increment the count corresponding to [Manufacturer = XYZ,
     Merchandise=PQR, Price>$Y, Geo=A]
     Else-if a counterfeit is detected for [Manufacturer XYZ, Merchandise PQR,
     Price > $Z, Geo=A] then
          Increment the count corresponding to [Manufacturer = XYZ,
     Merchandise=PQR, Price>$Z, Geo=A]
```

In another example of computing the number of counterfeits used by the validation rules update module 116, for the validation rules 115 based on size, the validation rules update module 116 may include the following specifications:

```
     If a counterfeit is detected for [Manufacturer XYZ, Merchandise PQR, Price
     > $X, Size=S] then
          Increment the count corresponding to [Manufacturer = XYZ,
     Merchandise=PQR, Price>$X, Size=S]
     Else-if a counterfeit is detected for [Manufacturer XYZ, Merchandise PQR,
     Price > $Y, Size=S] then
          Increment the count corresponding to [Manufacturer = XYZ,
     Merchandise=PQR, Price>$Y, Size=S]
     Else-if a counterfeit is detected for [Manufacturer XYZ, Merchandise PQR,
     Price > $Z, Size=S] then
          Increment the count corresponding to [Manufacturer = XYZ,
     Merchandise=PQR, Price>$Z, Size=S]
```

In another example of computing the number of counterfeits used by the validation rules update module 116, for the validation rules 115 based on color, the validation rules update module 116 may include the following specifications:

```
     If a counterfeit is detected for [Manufacturer XYZ, Merchandise PQR, Price
     > $X, Color = B] then
          Increment the count corresponding to [Manufacturer = XYZ,
     Merchandise=PQR, Price>$X, Color=B]
     Else-if a counterfeit is detected for [Manufacturer XYZ, Merchandise PQR,
     Price > $Y, Color=B] then
          Increment the count corresponding to [Manufacturer = XYZ,
     Merchandise=PQR, Price>$Y, Color=B]
     Else-if a counterfeit is detected for [Manufacturer XYZ, Merchandise PQR,
     Price > $Z, Color=B] then
          Increment the count corresponding to [Manufacturer = XYZ,
     Merchandise=PQR, Price>$Z, Color=B]
```

The client and server decision module 117 is to use the client and server decision rules 120 to dynamically determine whether to validate authenticity of the product 108 in the server environment 101 or the client application environment 102. The determination of whether a validation technique is executed in the server environment 101 or the client application environment 102 may be dynamically based on analytics performed by the XI D server 103, for example, to account for the capabilities of the mobile device 106 and the XID server 103. For example, if the likelihood of counterfeiting (i.e., counterfeit probability (i.e., prob)) is low, a check at the client application environment 102 (i.e., the mobile device 106) may be adequate. A check at the client application environment 102 may also be needed if connectivity to the server environment 101 is limited. Otherwise, a more complex check may be performed in the server environment 101. For example, in order to dynamically determine whether to validate authenticity of the product 108 in the server environment 101 or the client application environment 102, the client and server decision module 117 may include the following specifications for the client and server decision rules 120 based on a manufacturer (M), merchandise (M), price (P), and geographic location (G) of a product 108:

```
     If the item validated [Manufacturer XYZ, Merchandise PQR, Price > $X, Geo
     = A] has counterfeit Prob < MMPG_1 then
          Validate at the client
     Else
          Validate at the server
```

In the foregoing example using specifications based on a manufacturer, merchandise, price, and geographic location of a product 108, a counterfeit probability MMPG_1 may be specific to the product 108. MMPG may refer to the combination of manufacturer (M), merchandise (M), price (P), and geographic location (G). For example, a counterfeit probability MMPG_1 of 0.7 may be set for a type of a clothing product, where a counterfeit probability < 0.7 would require authenticity validation in the client application environment 102, and otherwise in the server environment 101.

In another example, the client and server decision module 117 may include the following specifications for the client and server decision rules 120 based on a manufacturer, merchandise, price and size of a product 108:

```
     If the item validated [Manufacturer XYZ, Merchandise PQR, Price > $X, Size
     = S] has counterfeit Prob < MMPS_1 then
          Validate at the client
     Else
          Validate at the server
```

In the foregoing example, MMPS may refer to the combination of manufacturer (M), merchandise (M), price (P), and size (S).

In another example, the client and server decision module 117 may include the following specifications for the client and server decision rules 120 based on a manufacturer, merchandise, and price of a product 108:

```
     If the item validated [Manufacturer XYZ, Merchandise PQR, Price > $X] has
     counterfeit Prob < MMP_1 then
          Validate at the client
     Else
          Validate at the server
```

In the foregoing example, MMP may refer to the combination of manufacturer (M), merchandise (M), and price (P).

In another example, the client and server decision module 117 may include the following specifications for the client and server decision rules 120 based on a manufacturer, and merchandise of a product 108:

```
     If the item validated [Manufacturer XYZ, Merchandise PQR] has counterfeit
     Prob < MM_1 then
          Validate at the client
     Else
          Validate at the server
```

In the foregoing example, MM may refer to the combination of manufacturer (M), and merchandise (M).

In another example, the client and server decision module 117 may include the following specifications for the client and server decision rules 120 based on a manufacturer (M) of a product 108:

```
     If the item validated [Manufacturer XYZ] has counterfeit Prob < M_1 then
          Validate at the client
     Else
          Validate at the server
```

In order to compute the counterfeit probability used by the client and server decision module 117 to dynamically determine whether to validate authenticity of the product 108 in the server environment 101 or the client application environment 102, the counterfeit probability may be computed as follows:

```
     If a counterfeit validation is requested for [Manufacturer XYZ, Merchandise
     PQR, Price > $X, Geo=A] > then
          Increment the count corresponding to Checked_[Manufacturer =
     XYZ, Merchandise=PQR, Price>$X, Geo=A]
     If a counterfeit is detected for [Manufacturer XYZ, Merchandise PQR, Price
     > $X, Geo=A] > then
          Increment the count corresponding to Detected_[Manufacturer =
     XYZ, Merchandise=PQR, Price>$X, Geo=A]
     Compute Prob. of Counterfeit_ [Manufacturer XYZ, Merchandise PQR, Price
     > $X, Geo=A] =
       Detected_[Manufacturer = XYZ, Merchandise=PQR, Price>$X, Geo=A] /
       Checked_[Manufacturer = XYZ, Merchandise=PQR, Price>$X, Geo=A]
```

In the foregoing example using specifications based on a manufacturer, merchandise, price, and geographic location of a product 108, the counterfeit probability may be based on the detected versus checked counterfeits for specifications based on a manufacturer, merchandise, price, and geographic location.

In another example, the counterfeit probability may be computed based on specifications based on a manufacturer, merchandise, price, and size as follows:

```
     If a counterfeit validation is requested for [Manufacturer XYZ, Merchandise
     PQR, Price > $X, Size=S] > then
          Increment the count corresponding to Checked_[Manufacturer =
     XYZ, Merchandise=PQR, Price>$X, Size=S]
     If a counterfeit is detected for [Manufacturer XYZ, Merchandise PQR, Price
     > $X, Size=S] > then
          Increment the count corresponding to Detected_[Manufacturer =
     XYZ, Merchandise=PQR, Price>$X, Size=S]
     Compute Prob. of Counterfeit_[Manufacturer XYZ, Merchandise PQR, Price
     > $X, Size=S] =
       Detected_[Manufacturer = XYZ, Merchandise=PQR, Price>$X, Size=S] /
       Checked_[Manufacturer = XYZ, Merchandise=PQR, Price>$X, Size=S]
```

In another example, the counterfeit probability may be computed based on specifications based on a manufacturer, merchandise, and price as follows:

```
     If a counterfeit validation is requested for [Manufacturer XYZ, Merchandise
     PQR, Price > $X] > then
          Increment the count corresponding to Checked_[Manufacturer =
     XYZ, Merchandise=PQR, Price>$X]
     If a counterfeit is detected for [Manufacturer XYZ, Merchandise PQR, Price
     > $X] > then
          Increment the count corresponding to Detected_[Manufacturer =
     XYZ, Merchandise=PQR, Price>$X]
     Compute Prob. of Counterfeit_[Manufacturer XYZ, Merchandise PQR, Price
     > $X] =
       Detected_[Manufacturer = XYZ, Merchandise=PQR, Price>$X] /
       Checked_[Manufacturer = XYZ, Merchandise=PQR, Price>$X]
```

In another example, the counterfeit probability may be computed based on specifications based on a manufacturer, and merchandise as follows:

```
     If a counterfeit validation is requested for [Manufacturer XYZ, Merchandise
     PQR] > then
          Increment the count corresponding to Checked_[Manufacturer =
     XYZ, Merchandise=PQR]
     If a counterfeit is detected for [Manufacturer XYZ, Merchandise PQR] > then
          Increment the count corresponding to Detected_[Manufacturer =
     XYZ, Merchandise=PQR]
     Compute Prob. of Counterfeit_ [Manufacturer XYZ, Merchandise PQR] =
       Detected_[Manufacturer = XYZ, Merchandise=PQR] /
     Checked_[Manufacturer = XYZ, Merchandise=PQR]
```

In another example, the counterfeit probability may be computed based on specifications based on a manufacturer as follows:

```
     If a counterfeit validation is requested for [Manufacturer XYZ] > then
          Increment the count corresponding to Checked_[Manufacturer =
     XYZ]
     If a counterfeit is detected for [Manufacturer XYZ] > then
          Increment the count corresponding to Detected_[Manufacturer =
     XYZ]
     Compute Prob. of Counterfeit_[Manufacturer XYZ] =
       Detected_[Manufacturer = XYZ] / Checked_[Manufacturer = XYZ]
```

The client and server decision module 117 may thus use the client and server decision rules 120 to dynamically determine whether to validate authenticity of the product 108 in the server environment 101 or the client application environment 102. For example, if network connectivity is low, an authenticity check at the client application environment 102 may be adequate, and otherwise, a more complex check may be performed in the server environment 101. For specific manufacturers or specific products, authenticity checks may be required in the server environment 101. Authenticity checks may also be required in the server environment 101 for certain geographic locations, or if a counterfeit detection probability is below a predetermined threshold. Specific rules and validation techniques that are determined to be executed by the mobile device 106 may be provided on the mobile device 106, for example, as validation techniques 121, validation rules 122, and client and server decision rules 123. The mobile device 106 may also include a client and server decision module 124 that uses the client and server decision rules 123 to dynamically determine whether to validate authenticity of the product 108 in the server environment 101 or the client application environment 102.

The counterfeit detection system 100 may also include a local cache that is built and includes a list of items that may be ordered by the probability of being a counterfeit and stored in the mobile device 106 which is used for counterfeit detection. The probability calculation may be performed as discussed herein and a subset of items may be cached in the mobile device 106. The information that is cached in a specific mobile device may also be driven by a rule set. For example, if the mobile device 106 is used for counterfeit validation in Geo=A (i.e., geographic location A), then the counterfeit detection system 100 may store the most frequently detected counterfeits of Geo=A in the mobile device 106 for local validation at the client application environment 102. In another example, if the mobile device 106 is used in different geographic locations, the counterfeit detection system 100 may store the most frequently detected counterfeits in the mobile device 106 for local validation at the client application environment 102. In another example, if the mobile device 106 is used for detecting counterfeits for a specific manufacturer, the counterfeit detection system 100 may store the most frequently detected counterfeit products of the manufacturer in the mobile device 106 for local validation at the client application environment 102.

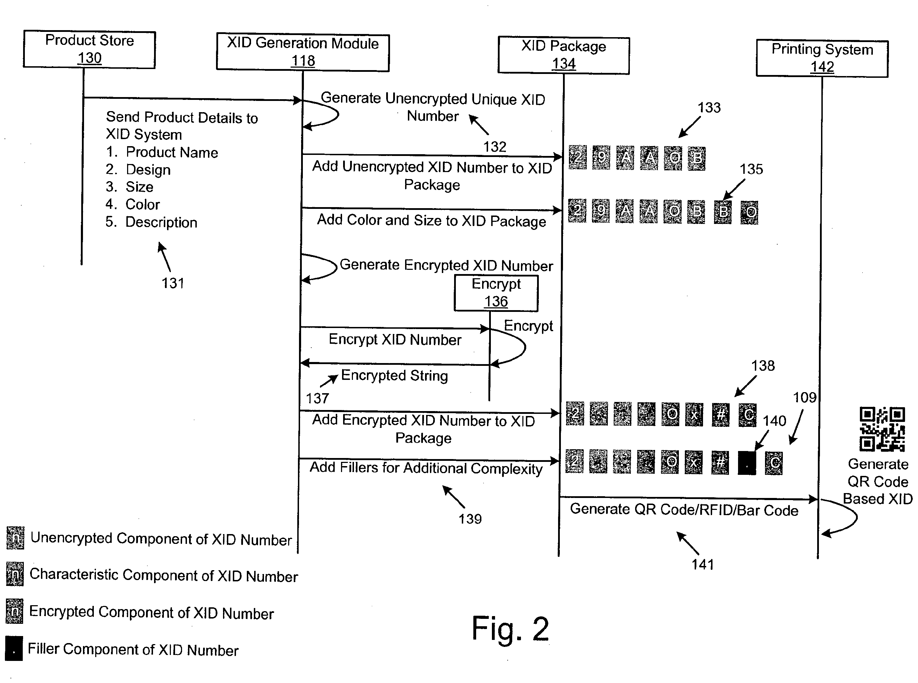

Figure 2 illustrates a layout for generation of a hybrid XID code (i.e., the XID 109), according to an example of the present disclosure. Referring to Figures 1 and 2, the XID generation module 118 is to generate the XID 109 that is applied to the product 108 and used for product authentication. In order to generate the XID 109, the XID generation module 118 may receive details of a product 108 from a product store 130. For example, at 131, the XID generation module 118 may receive a product name, design, size, color and other description associated with the product 108. At 132, the XID generation module 118 may generate, for example, a n-digit (e.g., 8 digits) number denoted an unencrypted XID, or UX at 133. The unencrypted XID 133 may be added to a XID package 134. The unencrypted XID 133 may follow a mathematical process to ensure that it is non-intuitive to duplicate. One example of such a mathematical process may include generating the unencrypted XID 133 as follows:
Hexadecimal + 3^{rd} Digit is C + Divisible by 5 and A
The mathematical process may be modified depending on the level of complexity needed for a particular application.

The XID generation module 118 may retrieve characteristics of the product 108, such as, for example, size (e.g., small (S), medium (M), large (L), extra-large (XL), etc.), and color (e.g., red (R), green (G), blue (B), etc.). These characteristics may be added to the unencrypted XID 133 at 135.

The XID generation module 118 may further generate, for example, a m-digit (e.g., 16 digit) number. The m-digit number may be encrypted at 136 and stored in an encrypted format denoted an encrypted XID, or EX at 137. Alternatively, instead of generating a m-digit number and encrypting the m-digit number, the n-digit unencrypted XID may be encrypted at 136. The encrypted XID at 137 may be appended to the end of the unencrypted XID 133 (i.e., concatenated with the unencrypted XID) including the characteristics at 135, with the entire XID code being denoted a first form of a hybrid XID at 138. The decision to choose n-digits for the n-digit unencrypted XID and m-digits for the m-digit number or a m-digit encrypted part of the hybrid XID may be based, for example, on the product parameters and capability of the mobile device 106 and XID server 103. For example, the number of digits n may be increased for mobile devices 106 that are capable of processing more information such that more information is available to a user of the mobile device 106 without having to resort to XID validity confirmation from the XID server 103. For the first form of the hybrid XID at 138, in an example, the unencrypted and encrypted portions of the first form of the hybrid XID may be respectively analyzed by the mobile device 106 and the XID server 103.

At 139, the XID generation module 118 may add inert filler bytes at 140 to the first form of the hybrid XID at 138 to increase the complexity. The XID generation module 118 may also shuffle the location of the various components of the first form of the hybrid XID at 138 for adding security, for example, by using a character mapping process for shuffling of the various components and thereafter accurate retrieval thereof. The final hybrid XID including the shuffled components and the inert filler bytes at 140 may be designated the XID 109, which may be used to generate a quick response (QR) code, a radio-frequency identification (RFID), bar code, or another type of code at 141 that is printed at 142 and applied to the product 108.

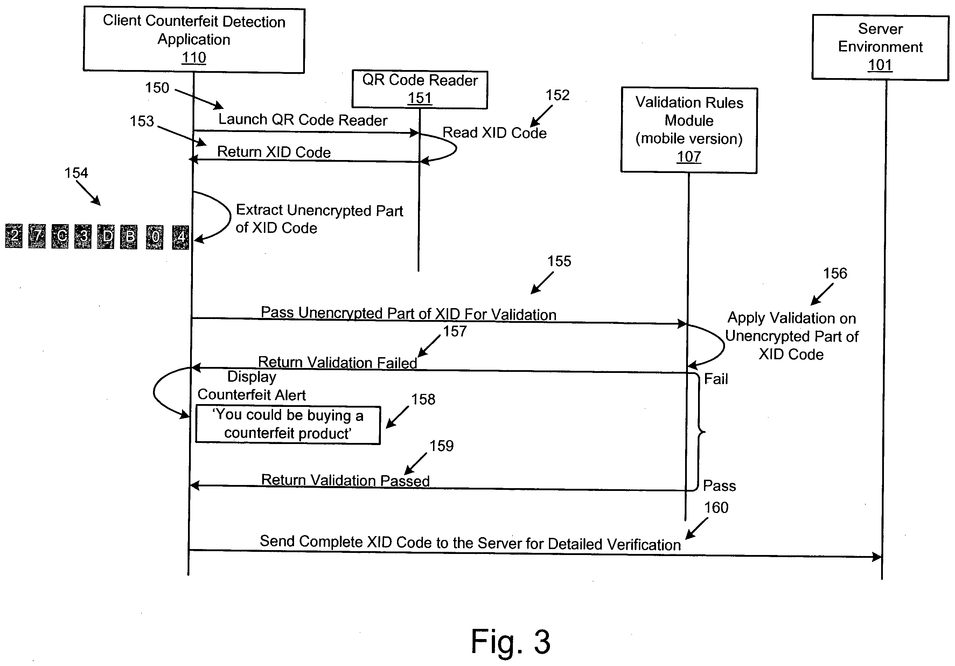

Figure 3 illustrates a validation layout for a client XID check, according to an example of the present disclosure. Referring to Figures 1 and 3, the example of Figure 3 refers to the foregoing first example of the validation technique 112, which may be based on part of a XID (e.g., the n-digit unencrypted XID), where an authenticity check may be performed by the mobile device 106 including a mobile version of the validation module 107 and the validation rules module 113. At 150, a QR code reader 151 of the mobile device 106 may be launched to read the XID 109 at 152. At 153, the XID 109 that is read may be returned to the client counterfeit detection application 110 on the mobile device 106. At 154, the n-digit unencrypted XID may be extracted from the XID 109. At 155, the n-digit unencrypted XID may be forwarded to the mobile version of the validation module 107 on the mobile device 106. Based on the validation determination at 156, at 157, if a determination is made that the n-digit unencrypted XID is invalid, a counterfeit alert 158 may be generated. At 159, if a determination is made that the n-digit unencrypted XID is valid, at 160, the complete XID 109 may be sent to the XID server 103 for detailed verification of the XID 109. The validation logic of Figure 3 thus determines if the n-digit unencrypted XID has been generated by the XID generation module 118, or is an identification (ID) generated by a counterfeiter.

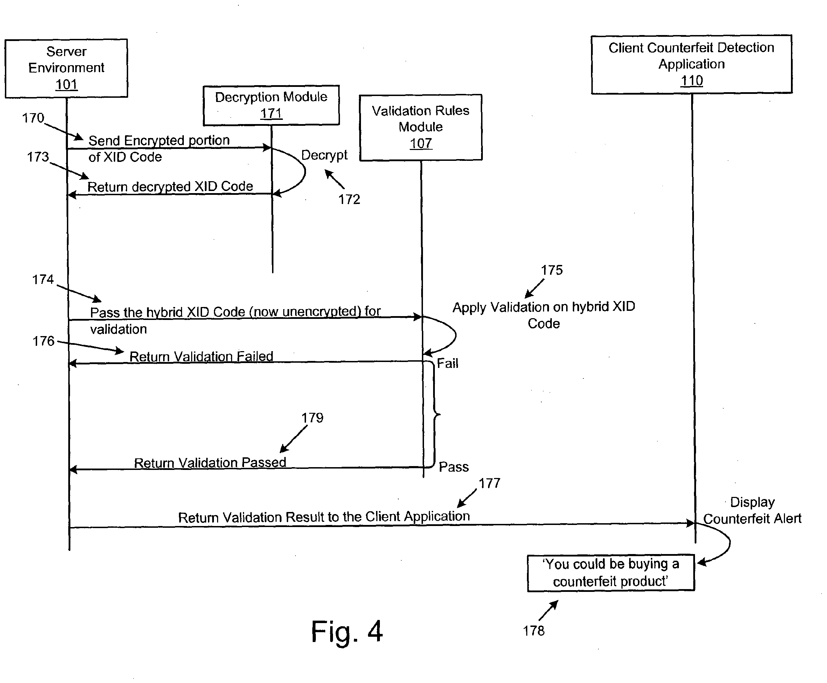

Figure 4 illustrates a validation layout for a server XID format check, according to an example of the present disclosure. Referring to Figures 1 and 4, the example of Figure 4 refers to an example of a XID format check, which may be based on the m-digit encrypted part of the hybrid XID (i.e., XID 109), where an authenticity check may be performed by the mobile device 106 using the server environment 101. At 170, a decryption module 171 that may be part of the validation module 107 may be launched to decrypt the m-digit encrypted part of the hybrid XID at 172 (the QR code reader 151 of the mobile device 106 may be used to read the XID 109). At 173, the decrypted m-digit encrypted part of the hybrid XID may be returned from the decryption module 171. At 174, the complete decrypted hybrid XID (i.e., including the n-digit unencrypted XID and decrypted m-digit encrypted part) may be forwarded to the validation module 107 of the server environment 101. Alternatively, at 174, the decrypted m-digit encrypted part of the hybrid XID may be forwarded to the validation module 107 of the server environment 101. Based on the validation determination at 175, at 176, if a determination is made that the complete decrypted hybrid XID or the decrypted m-digit encrypted part of the hybrid XID is invalid, at 177, a validation failed result may be sent to the client counterfeit detection application 110 on the mobile device 106. If a validation failed result is sent to the client counterfeit detection application 110 on the mobile device 106, at 178, a counterfeit alert may be generated. At 179, if a determination is made that the complete decrypted hybrid XID or the decrypted m-digit encrypted part of the hybrid XID is valid, at 177, a validation passed result may be sent to the client counterfeit detection application 110 on the mobile device 106. The validation logic of Figure 4 thus determines if the complete decrypted hybrid XID or the m-digit encrypted part of the hybrid XID has been generated by the XID generation module 118 based on the XID format, or is an ID generated by a counterfeiter.

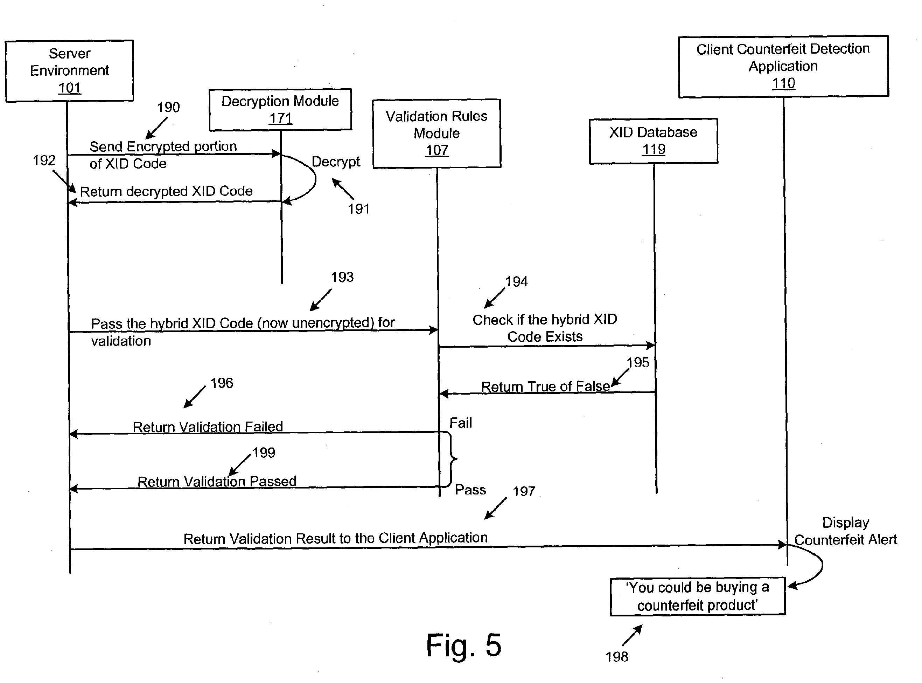

Figure 5 illustrates a validation layout for a server XID existence check, according to an example of the present disclosure. Referring to Figures 1 and 5, the example of Figure 5 refers to the foregoing third example of the validation technique 112, which may be based on existence of a correctly formatted XID, where an authenticity check may be performed by the mobile device 106 using the server environment 101. Based on the capacity of the mobile device 106, the authenticity check may be performed by the mobile device 106 without using the server environment 101. At 190, the decryption module 171 may be launched to decrypt the m-digit encrypted part of the hybrid XID at 191 (the QR code reader 151 of the mobile device 106 may be used to read the XID 109). At 192, the decrypted m-digit encrypted part of the hybrid XID may be received from the decryption module 171. At 193, the complete decrypted hybrid XID (i.e., including the n-digit unencrypted XID and decrypted m-digit encrypted part) may be forwarded to the validation module 107 of the server environment 101. Alternatively, at 193, the decrypted m-digit encrypted part of the hybrid XID may be forwarded to the validation module 107 of the server environment 101. At 194, the XID database 119 may be checked to determine if the complete decrypted hybrid XID or the decrypted m-digit encrypted part of the hybrid XID exists (i.e., the XID 109 was indeed generated by the XID generation module 118 and not an unauthorized third-party). At 195, the response from the determination at 194 may be evaluated. At 196, if a determination is made that the complete decrypted hybrid XID or the decrypted m-digit encrypted part of the hybrid XID does not exist, at 197, a validation failed result may be sent to the client counterfeit detection application 110 on the mobile device 106. At 198, a counterfeit alert may be displayed on the mobile device 106. At 199, if a determination is made that the complete decrypted hybrid XID or the decrypted m-digit encrypted part of the hybrid XID exists, at 197, a validation passed result may be sent to the client counterfeit detection application 110 on the mobile device 106. The validation logic of Figure 5 thus determines if the complete decrypted hybrid XID or the m-digit encrypted part of the hybrid XID has been generated by the XID generation module 118 based on existence of a correctly formatted XID, or is an ID generated by a counterfeiter.

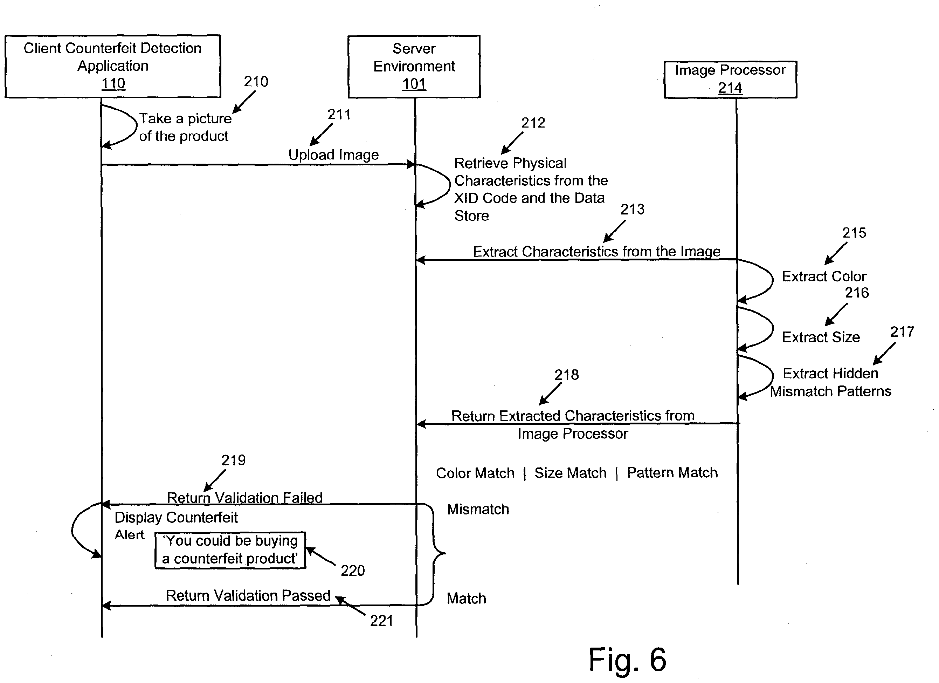

Figure 6 illustrates a validation layout for an automated image characteristics check, according to an example of the present disclosure. Referring to Figures 1 and 6, the example of Figure 6 refers to the foregoing sixth and seventh examples of the validation technique 112, which may be based on physical characteristics of the product 108, where an authenticity check may be performed by the mobile device 106 using the server environment 101 and input from a user of the mobile device 106 or no input from the user of the mobile device 106 (i.e., automatically using the server environment 101). Based on the capacity of the mobile device 106, the authenticity check may be performed by the mobile device 106 without using the server environment 101. At 210, the client counterfeit detection application 110 on the mobile device 106 may be launched to take a picture of the product 108, and the QR code reader 151 of the mobile device 106 may be used to read the XID 109. At 211, the product image and the associated XID 109 may be uploaded to the XID server 103 in the server environment 101. At 212, the XID server 103 may use the logic associated with the XID generation module 118 to retrieve physical characteristics from the XID 109. The physical characteristics and associated XID codes 109 may be stored in the XID database 119. At 213, an image processor 214 of the server environment 101 may be used to extract characteristics from the product image, such as, for example, color at 215, size at 216 and hidden patterns (e.g., altered stitches on a purse) at 217. At 218, the extracted characteristics from the product image may be returned, for example, to the validation module 107 to match to the physical characteristics retrieved from the XID 109. Based on the validation determination at 218, at 219, if a determination is made that the XID 109 does not match the associated product characteristics extracted from the product image, at 220, a counterfeit alert may be generated. At 221, if a determination is made that the XID 109 matches the associated product characteristics extracted from the product image, an authentication alert may be generated.

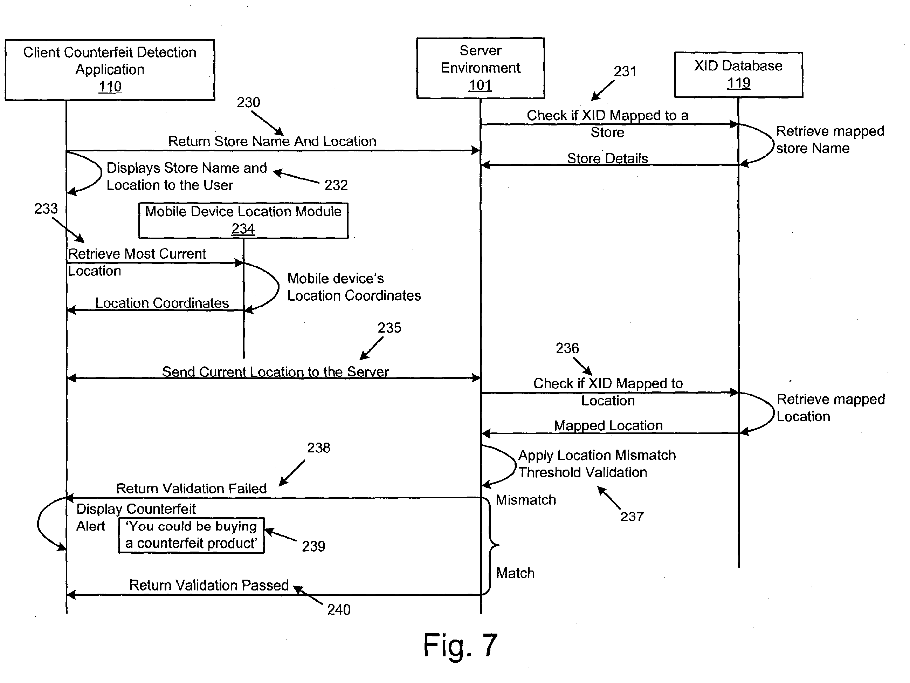

Figure 7 illustrates a validation layout for a location check, according to an example of the present disclosure. Referring to Figure 1 and 7, the example of Figure 7 refers to the foregoing fourth example of the validation technique 112, which may be based on a location of the product 108, where an authenticity check may be performed by the mobile device 106 using the server environment 101. At 230, the client counterfeit detection application 110 on the mobile device 106 may be launched to determine a store name and location where the product is being sold, and the QR code reader 151 of the mobile device 106 may be used to read the XID 109. The store name, location and XID 109 may be forwarded to the server environment 101, where at 231, the validation module 107 and the XID database 119 may be used to determine if the XID 109 is mapped to the store. At 232, the store name and location mapped to the XID 109 may be displayed on the mobile device 106. This allows a user of the mobile device 106 to determine if the store is indeed authorized to sell the product 108. At 233, a mobile device location module 234 on the mobile device 106 may be used to determine a current location of the mobile device 106. At 235, the current location of the mobile device 106 may be sent to the XID server 103. At 236, the validation module 107 and the XID database 119 may be used to determine if the XID 109 is mapped to the current location of the mobile device 106. At 237, a location threshold (e.g., 20 feet) may be used to determine if the XID 109 indeed matches the current location of the mobile device 106 within the location threshold. Based on the validation determination at 237, at 238, if a determination is made that the XID 109 does not match the associated store name and location for the product 108, or the XID 109 does not match the current location of the mobile device 106, at 239, a counterfeit alert may be generated. At 240, if a determination is made that the XID 109 matches the associated store name and location for the product 108, and the XID 109 matches the current location of the mobile device 106, an authentication alert may be generated.

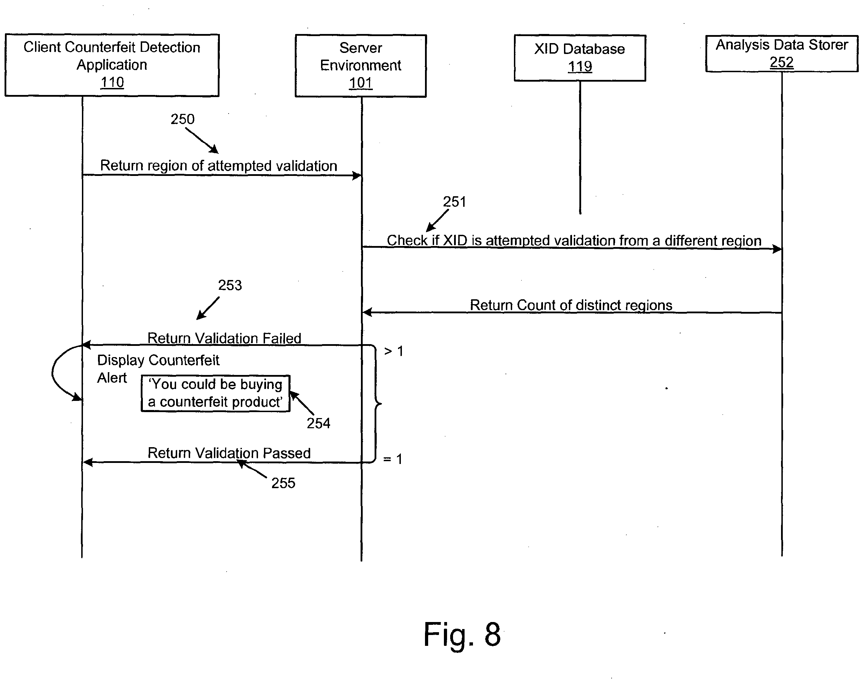

Figure 8 illustrates a validation layout for a location check, according to an example of the present disclosure. Referring to Figure 1 and 8, the example of Figure 8 refers to an example of a validation based on a region for an attempted validation, where an authenticity check may be performed by the mobile device 106 using the server environment 101. At 250, the client counterfeit detection application 110 on the mobile device 106 may be launched to determine a region of attempted validation, and the QR code reader 151 of the mobile device 106 may be used to read the XID 109. The region of attempted validation and XID 109 may be forwarded to the server environment 101, where the validation module 107 and the XID database 119 may be used to determine if the XID 109 is mapped to region of attempted validation. If the attempted validation is from a different region compared to the region that is mapped to the XID 109, then at 251, an analysis data store 252 may be used to determine a count of distinct regions where the product 108 is to be sold. For example, an electronic product associated with a particular XID 109 may be sold in Europe as opposed to North America based on electricity constraints. If the number of distinct regions where the product 108 is to be sold is greater than 1, at 253, then a determination is made that the XID 109 is not mapped to region of attempted validation, and at 254, a counterfeit alert may be generated. At 255, if a determination is made that the number of distinct regions where the product 108 is to be sold is equal to 1, the XID 109 is mapped to region of attempted validation, and an authentication alert may be generated.

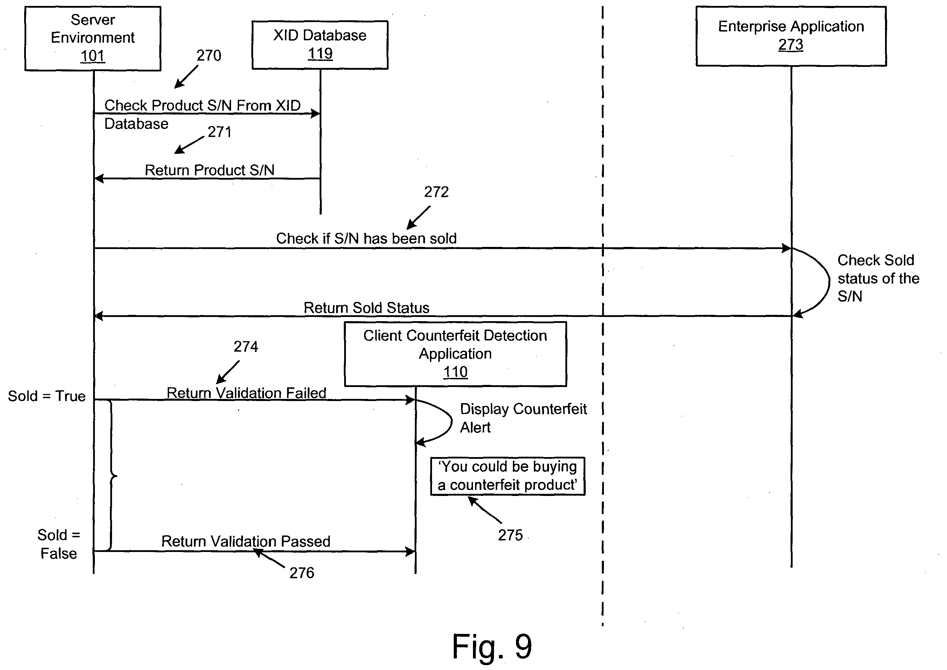

Figure 9 illustrates a validation layout for a sale based check, according to an example of the present disclosure. Referring to Figures 1 and 9, the example of Figure 9 refers to the foregoing fifth example of the validation technique 112, which may be based on a sale of the product 108, where an authenticity check may be performed by the mobile device 106 using the server environment 101. At 270, the QR code reader 151 of the mobile device 106 may be used to read the XID 109, and at 271, the XID code may be used to determine a serial number of the product 108 from the XID database 119. At 272, an enterprise application 273 that may be part of the server environment 101 or separate from the server environment 101 may be used to determine if the determined serial number is for a product 108 that has been previously sold. If the serial number is for a product 108 that has been previously sold (i.e., the determination that the serial number is for a product 108 that has been sold is true), at 274, a determination is made that the product 108 is a counterfeit, and at 275, a counterfeit alert may be generated. At 276, if a determination is made that the serial number is for a product 108 that has not been previously sold (i.e., the determination that the serial number is for a product 108 that has been sold is false), and an authentication alert may be generated.

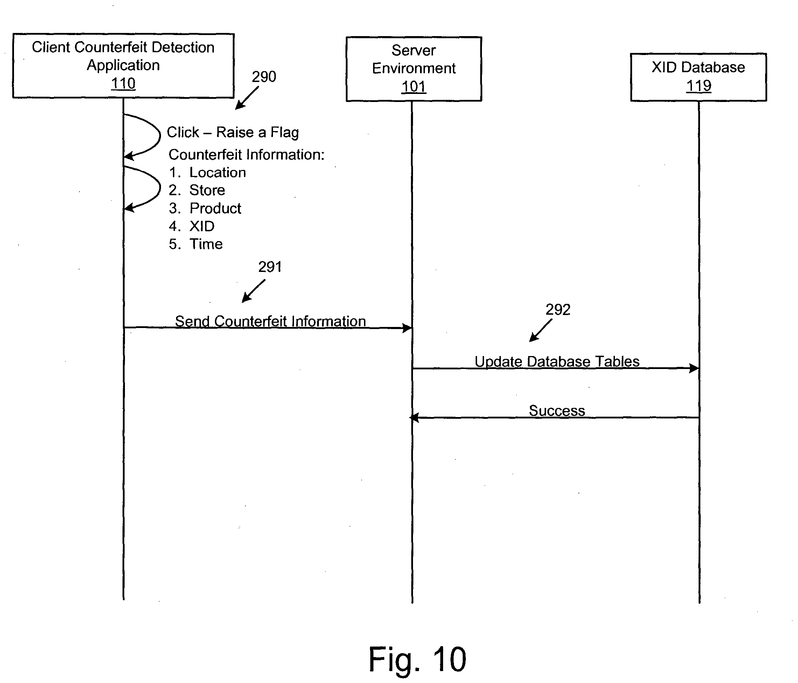

Figure 10 illustrates a layout for a database update, according to an example of the present disclosure. Referring to Figures 1 and 10, as discussed herein with reference to the foregoing validation technique 112, if a counterfeit or authentic product alert is generated, at 290, information, such as, for example, a store location and name, product details, XID and time of the alert may be ascertained. At 291, the information ascertained at 290 may be forwarded to the server environment 101. At 292, the information sent at 291 to the server environment 101 may be stored in the XID database 119 and used as discussed herein with reference to the foregoing examples and validation techniques 112.

### 3. Method

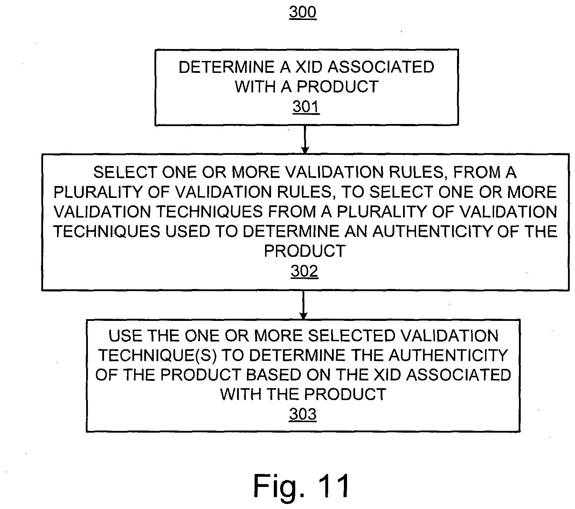

Figure 11 illustrates a flowchart of a method 300 for counterfeit detection, according to examples. The method 300 may be implemented on the counterfeit detection system described above with reference to Figures 1-10 by way of example and not limitation. The method 300 may be practiced in other systems.

Referring to Figure 11, at block 301, a XID associated with a product may be determined. For example, referring to Figures 1 and 3, at 150, a QR code reader 151 of the mobile device 106 may be launched to read the XID 109. The XID may include an unencrypted component and/or an encrypted component associated with a parameter associated with the product. Referring to Figures 1 and 2, the XID generation module 118 may generate the XID 109 that is applied to the product 108 and used for product authentication. At 132, the XID generation module 118 may generate, for example, a n-digit (e.g., 8 digits) number denoted an unencrypted XID, or UX at 133. The XID generation module 118 may further generate, for example, a m-digit (e.g., 16 digit) number. The m-digit number may be encrypted at 136 and stored in an encrypted format denoted an encrypted XID, or EX at 137. Alternatively, instead of generating a m-digit number and encrypting the m-digit number, the n-digit unencrypted XID may be encrypted at 136.

At block 302, one or more validation rules may be selected, from a plurality of validation rules, to select one or more validation techniques from a plurality of validation techniques used to determine an authenticity of the product. For example, referring to Figure 1, the validation rules module 113 may use appropriate validation rules 115 based on which one or more of the foregoing validation techniques 112 is chosen by the validation module 107. The validation rules module 113 may further select one or more validation rules 115 that select one or more validation techniques 112 used to determine an authenticity of the product

At block 303, the one or more selected validation techniques may be used to determine the authenticity of the product based on the XID associated with the product.

### 4. Computer Readable Medium

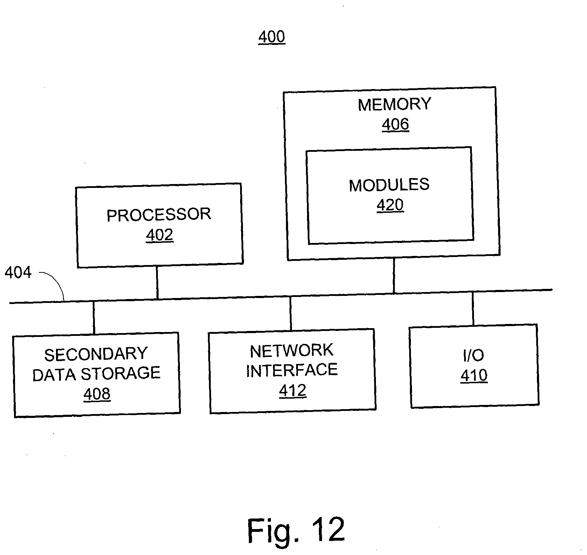

Figure 12 shows a computer system 400 that may be used with the examples described herein. The computer system 400 represents a generic platform that includes components that may be in a server or another computer system. The computer system 400 may be used as a platform for the system 100. The computer system 400 may execute, by a processor or other hardware processing circuit, the methods, functions and other processes described herein. These methods, functions and other processes may be embodied as a computer program product comprising machine readable instructions e.g. in the form of a signal, a data stream and/or stored on computer readable medium, which may be non-transitory, such as hardware storage devices (e.g., RAM (random access memory), ROM (read only memory), EPROM (erasable, programmable ROM), EEPROM (electrically erasable, programmable ROM), hard drives, and flash memory).

The computer system 400 includes a processor 402 that may implement or execute machine readable instructions performing some or all of the methods, functions and other processes described herein. Commands and data from the processor 402 are communicated over a communication bus 404. The computer system 400 also includes a main memory 406, such as a random access memory (RAM), where the machine readable instructions and data for the processor 402 may reside during runtime, and a secondary data storage 408, which may be nonvolatile and stores machine readable instructions and data. The memory and data storage are examples of computer readable mediums. The memory 406 may include modules 420 including machine readable instructions residing in the memory 406 during runtime and executed by the processor 402. The modules 420 may include the modules of the system 100 described with reference to Figures 1-10.

The computer system 400 may include an I/O device 410, such as a keyboard, a mouse, a display, etc. The computer system 400 may include a network interface 412 for connecting to a network. Other known electronic components may be added or substituted in the computer system 400.

What has been described and illustrated herein are examples along with some of their variations. The terms, descriptions and figures used herein are set forth by way of illustration only and are not meant as limitations. Many variations are possible within the scope of the subject matter, which is intended to be defined by the following claims and their equivalents in which all terms are meant in their broadest reasonable sense unless otherwise indicated.

## Claims

1. A counterfeit detection system comprising:
a memory storing a module comprising machine readable instructions to:
determine a X-identification, XID, (109) associated with a product (108), wherein the XID (10) includes at least one of an unencrypted component and an encrypted component associated with a parameter associated with the product and wherein in the XID (109) is a hybrid XID and includes the unencrypted component concatenated with the encrypted component, the encrypted component being appended to the end of the unencrypted component and wherein inert filler bytes are added (139) to the hybrid XID (109) and the location of the various components of the hybrid XID (109) are shuffled;
select at least one validation rule, from a plurality of validation rules, to select at least one validation technique from a plurality of validation techniques used to determine an authenticity of the product; and
use the at least one selected validation technique to determine the authenticity of the product (108) based on the XID (109) associated with the product (108); and a processor to implement the module.

2. The counterfeit detection system of claim 1, wherein the parameter associated with the product includes either a product manufacturer name, or a product name, or a product size, or a color associated with the product, or a size associated with the product, or a price of the product, or a geographic location of the product, or any combination thereof.

3. The counterfeit detection system of any one of the preceding claims, further comprising machine readable instructions to:
determine, based on at least one client and server decision rule, whether to validate the authenticity of the product using a mobile device or in a server environment; and update, based on analysis of date from the authenticity determination of the product, the determination to validate the authenticity of the product using the mobile device or in the server environment; and/or
determine, based on at least one client and server decision rule, whether to validate the authenticity of the product using a mobile device or in a server environment; and update the at least one client and server decision rule based on analysis of data from the authenticity determination of the product.

4. The counterfeit detection system of any one of the preceding claims, wherein the at least one validation technique includes at least one of:
using the unencrypted component of the XID with a mobile device to determine the authenticity of the product;
using the unencrypted and encrypted components of the XID with the mobile device and a server environment to determine the authenticity of the product;
determining the authenticity of the product based on determination of a correct format of the XID;
determining the authenticity of the product based on a geographic location of the product;
determining the authenticity of the product based on determination of a previous sale of the product;
determining the authenticity of the product based on physical characteristics of the product; and
determining the authenticity of the product based on a hidden pattern on the product.

5. The counterfeit detection system of any one of the preceding claims, wherein the at least one validation rule includes:
using the at least one selected validation technique based on a comparison of the parameter associated with the product to a predetermined threshold; and/or
using the at least one selected validation technique based on a determination of whether the parameter associated with the product matches a predetermined value; and/or
using the at least one selected validation technique based on a comparison of the parameter associated with the product to a predetermined threshold; and using the at least one selected validation technique based on a determination of whether the parameter associated with the product matches a predetermined value; and/or
using the at least one selected validation technique based on a business relationship between two entities.

6. The counterfeit detection system of any one of the preceding claims, further comprising machine readable instructions to:
update the at least one selected validation rule based on analysis of data from the authenticity determination of the product; and/or
update the at least one selected validation rule based on a comparison of a number of counterfeits for the product to a predetermined threshold, wherein the predetermined threshold preferably is based on at least two parameters associated with the product.

7. The counterfeit detection system of any one of the preceding claims, wherein the at least one validation technique includes:
determining the authenticity of the product at a mobile device or at a server environment based on a counterfeit probability.

8. The counterfeit detection system of claim 7, further comprising machine readable instructions to compute the counterfeit probability based on an evaluation of requested counterfeit validations and detected counterfeits, wherein the counterfeit probability preferably is based on at least two parameters associated with the product.

9. The counterfeit detection system of any one of the preceding claims, further comprising machine readable instructions to store frequently detected counterfeit products for authenticity validation using a mobile device, wherein the frequently detected counterfeit products preferably are based on determination of a geographic location of the counterfeit products.

10. A method for counterfeit detection, the method comprising:
determining a X-identification, XID, (109) associated with a product (108), wherein the XID (109) includes at least one of an unencrypted component and an encrypted component associated with a parameter associated with the product (108) and wherein the XID (109) is a hybrid XID and includes the unencrypted component concatenated with the encrypted component, the encrypted component being appended to the end of the unencrypted component and wherein inert filler bytes are added (139) to the hybrid XID (109) and the location of the various components of the hybrid XID (109) are shuffled;
selecting at least one validation rule, from a plurality of validation rules, to select at least one validation technique from a plurality of validation techniques used to determine an authenticity of the product (108); and
using, by a processor, the at least one selected validation technique to determine the authenticity of the product (108) based on the XID (109) associated with the product (108).

11. The method of claim 10, further comprising determining, based on at least one client and server decision rule, whether to validate the authenticity of the product using a mobile device or in a server environment; and updating, based on analysis of data from the authenticity determination of the product, the determination to validate the authenticity of the product using the mobile device or in the server environment; and/or wherein the at least one validation rule includes: using the at least one selected validation technique based on a comparison of the parameter associated with the product to a predetermined threshold; and using the at least one selected validation technique based on a determination of whether the parameter associated with the product matches a predetermined value.

12. The method of claim 10 or 11, further comprising: updating the at least one selected validation rule based on a comparison of a number of counterfeits for the product to a predetermined threshold; and/or wherein the at least one validation technique includes determining the authenticity of the product at a mobile device or at a server environment based on a counterfeit probability.

13. A computer program product comprising computer-readable instructions which, when loaded and executed on a suitable system, perform the steps of a method according to any one of claims 10 to 12.

## Patentansprüche

1. Fälschungsdetektionssystem, umfassend:
einen Speicher, der ein Modul speichert, das maschinenlesbare Anweisungen umfasst, zum:
Bestimmen einer X-Identifikation, (XID), (109), die mit einem Produkt (108) assoziiert bzw. verknüpft ist, wobei die XID (10) zumindest eine einer unverschlüsselten Komponente und einer verschlüsselten Komponente enthält, die mit einem Parameter assoziiert bzw. verknüpft ist bzw. sind, der mit dem Produkt assoziiert bzw. verknüpft ist, und wobei die XID (109) eine Hybrid-XID ist und die unverschlüsselte Komponente enthält, die mit der verschlüsselten Komponente verkettet ist, wobei die verschlüsselte Komponente an das Ende der unverschlüsselten Komponente angehängt ist und wobei träge bzw. inaktive Füllbytes zu der Hybrid-XID (109) hinzugefügt (139) werden und der Standort der verschiedenen Komponenten der Hybrid-XID (109) gemischt wird bzw. werden;
Auswählen zumindest einer Validierungsregel aus einer Mehrzahl von Validierungsregeln, um zumindest eine Validierungstechnik aus einer Mehrzahl von Validierungstechniken auszuwählen, die verwendet werden, um eine Echtheit des Produkts zu bestimmen; und
Verwenden der zumindest einen ausgewählten Validierungstechnik, um die Echtheit des Produkts (108) basierend auf der mit dem Produkt (108) assoziierten bzw. verknüpften XID (109) zu bestimmen; und
einen Prozessor, der das Modul zu implementiert.

2. Fälschungsdetektionssystem nach Anspruch 1, wobei der mit dem Produkt assoziierte Parameter entweder einen Produktherstellernamen oder einen Produktnamen oder eine Produktgröße oder eine Farbe, die mit dem Produkt assoziiert bzw. verknüpft ist, oder eine Größe, die mit dem Produkt assoziiert bzw. verknüpft ist, oder einen Preis des Produkts oder einen geografischen Standort des Produkts oder eine Kombination daraus enthält.

3. Fälschungsdetektionssystem nach einem der vorhergehenden Ansprüche, ferner umfassend maschinenlesbare Anweisungen zum:
Bestimmen, basierend auf zumindest einer Client- und Server-Entscheidungsregel, ob die Echtheit des Produkts zu validieren ist, und zwar unter Verwendung einer mobilen Vorrichtung oder in einer Serverumgebung;
und Aktualisieren, basierend auf einer Analyse von Daten aus der Echtheitsbestimmung des Produkts, der Bestimmung, die Echtheit des Produkts unter Verwendung des mobilen Geräts oder in der Serverumgebung zu validieren; und/oder
Bestimmen, basierend auf zumindest einer Client- und Server-Entscheidungsregel, ob die Echtheit des Produkts unter Verwendung einer mobilen Vorrichtung oder in einer Serverumgebung zu validieren ist; und Aktualisieren der zumindest einen Client- und Server-Entscheidungsregel basierend auf der Analyse von Daten aus der Echtheitsbestimmung des Produkts.

4. Fälschungsdetektionssystem nach einem der vorhergehenden Ansprüche, wobei die zumindest eine Validierungstechnik zumindest eines umfasst von:
Verwenden der unverschlüsselten Komponente der XID mit einer mobilen Vorrichtung, um die Echtheit des Produkts zu bestimmen;
Verwenden der unverschlüsselten und verschlüsselten Komponenten der XID mit der mobilen Vorrichtung und einer Serverumgebung, um die Echtheit des Produkts zu bestimmen;
Bestimmen der Echtheit des Produkts basierend auf der Bestimmung eines korrekten Formats der XID;
Bestimmen der Echtheit des Produkts basierend auf einem geografischen Standort des Produkts;
Bestimmung der Echtheit des Produkts basierend der Bestimmung eines früheren Verkaufs des Produkts;
Bestimmen der Echtheit des Produkts basierend auf physikalischen Eigenschaften des Produkts; und
Bestimmen der Echtheit des Produkts basierend auf einem versteckten Muster auf dem Produkt.

5. Fälschungsdetektionssystem nach einem der vorhergehenden Ansprüche, wobei die zumindest eine Validierungsregel umfasst:
Verwenden der zumindest einen ausgewählten Validierungstechnik basierend auf einem Vergleich des Parameters, der mit dem Produkt assoziiert ist, mit einem vorbestimmten Schwellenwert; und/oder
Verwenden der zumindest einen ausgewählten Validierungstechnik basierend auf einer Bestimmung, ob der mit dem Produkt assoziierte Parameter mit einem vorbestimmten Wert übereinstimmt; und/oder
Verwenden der zumindest einen ausgewählten Validierungstechnik basierend auf einem Vergleich des mit dem Produkt assoziierten Parameters mit einem vorbestimmten Schwellenwert; und Verwenden der zumindest einen ausgewählten Validierungstechnik basierend auf einer Bestimmung, ob der mit dem Produkt assoziierte Parameter mit einem vorbestimmten Wert übereinstimmt; und/oder
Verwenden der zumindest einen ausgewählten Validierungstechnik basierend auf einer Geschäftsbeziehung zwischen zwei Entitäten.

6. Fälschungsdetektionssystem nach einem der vorhergehenden Ansprüche, ferner umfassend maschinenlesbare Anweisungen zum:
Aktualisieren der zumindest einen ausgewählten Validierungsregel basierend auf einer Analyse von Daten aus der Echtheitsbestimmung des Produkts; und/oder
Aktualisieren der zumindest einen ausgewählten Validierungsregel basierend auf einem Vergleich einer Anzahl von Fälschungen für das Produkt mit einem vorbestimmten Schwellenwert, wobei der vorbestimmte Schwellenwert vorzugsweise auf zumindest zwei Parametern basiert, die mit dem Produkt assoziiert sind.

7. Fälschungsdetektionssystem nach einem der vorhergehenden Ansprüche, wobei die zumindest eine Validierungstechnik umfasst:
Bestimmen der Echtheit des Produkts an einer mobilen Vorrichtung oder an einer Serverumgebung basierend auf einer Fälschungswahrscheinlichkeit.

8. Fälschungsdetektionssystem nach Anspruch 7, ferner umfassend maschinenlesbare Anweisungen zum Berechnen der Fälschungswahrscheinlichkeit basierend auf einer Auswertung von angeforderten Fälschungsvalidierungen und detektierten Fälschungen, wobei die Fälschungswahrscheinlichkeit vorzugsweise auf zumindest zwei Parametern basiert, die mit dem Produkt assoziiert sind.

9. Fälschungsdetektionssystem nach einem der vorhergehenden Ansprüche, ferner umfassend maschinenlesbare Anweisungen zum Speichern häufig detektierter gefälschter Produkte zur Echtheitsvalidierung unter Verwendung einer mobilen Vorrichtung, wobei die häufig detektierten gefälschten Produkte vorzugsweise auf der Bestimmung eines geographischen Standorts der gefälschten Produkte basieren.

10. Verfahren zur Fälschungserkennung, wobei das Verfahren umfasst:
Bestimmen einer X-Identifikation, (XID), (109), die mit einem Produkt (108) assoziiert bzw. verknüpft ist, wobei die XID (109) zumindest eine einer unverschlüsselten Komponente und einer verschlüsselten Komponente enthält, die mit einem Parameter assoziiert bzw. verknüpft ist bzw. sind, der mit dem Produkt (108) assoziiert bzw. verknüpft ist, und wobei die XID (109) eine Hybrid-XID ist und die unverschlüsselte Komponente enthält, die mit der verschlüsselten Komponente verkettet ist, wobei die verschlüsselte Komponente an das Ende der unverschlüsselten Komponente angehängt ist und wobei träge bzw. inaktive Füllbytes zu der Hybrid-XID (109) hinzugefügt (139) werden und der Standort der verschiedenen Komponenten der Hybrid-XID (109) gemischt wird bzw. werden;
Auswählen zumindest einer Validierungsregel aus einer Mehrzahl von Validierungsregeln, um zumindest eine Validierungstechnik aus einer Mehrzahl von Validierungstechniken auszuwählen, die verwendet werden, um eine Echtheit des Produkts (108) zu bestimmen; und
Verwenden, durch einen Prozessor, der zumindest einen ausgewählten Validierungstechnik, um die Echtheit des Produkts (108) basierend auf der mit dem Produkt (108) assoziierten bzw. verknüpften XID (109) zu bestimmen;

11. Verfahren nach Anspruch 10, ferner umfassend ein Bestimmen, basierend auf zumindest einer Client- und Server-Entscheidungsregel, ob die Echtheit des Produkts zu validieren ist, und zwar unter Verwendung einer mobilen Vorrichtung oder in einer Serverumgebung; und Aktualisieren, basierend auf einer Analyse von Daten aus der Echtheitsbestimmung des Produkts, der Bestimmung, die Echtheit des Produkts unter Verwendung der mobilen Vorrichtung oder in der Serverumgebung zu validieren; und/oder wobei die zumindest eine Validierungsregel umfasst: Verwenden der zumindest einen ausgewählten Validierungstechnik basierend auf einem Vergleich des mit dem Produkt assoziierten Parameters mit einem vorbestimmten Schwellenwert; und Verwenden der zumindest einen ausgewählten Validierungstechnik basierend auf einer Bestimmung, ob der mit dem Produkt assoziierte Parameter mit einem vorbestimmten Wert übereinstimmt.

12. Verfahren nach Anspruch 10 oder 11, ferner umfassend: Aktualisieren der zumindest einen ausgewählten Validierungsregel basierend auf einem Vergleich einer Anzahl von Fälschungen für das Produkt mit einem vorbestimmten Schwellenwert; und/oder wobei die zumindest eine Validierungstechnik das Bestimmen der Echtheit des Produkts an einer mobilen Vorrichtung oder an einer Serverumgebung basierend auf einer Fälschungswahrscheinlichkeit umfasst.

13. Computerprogrammprodukt, umfassend computerlesbaren Anweisungen, die, wenn sie auf einem geeigneten System geladen und ausgeführt werden, die Schritte eines Verfahrens nach einem der Ansprüche 10 bis 12 ausführen.

## Revendications

1. Système de détection de contrefaçon comprenant :
une mémoire stockant un module comprenant des instructions lisibles par machine pour :
déterminer une identification croisée, XID, (109) associée à un produit (108), dans lequel la XID (10) inclut au moins un d'un composant non chiffré et d'un composant chiffré associé à un paramètre associé au produit, et dans lequel une XID hybride est dans la XID (109) et inclut le composant non chiffré concaténé avec le composant chiffré, le composant chiffré étant annexé à la fin du composant non chiffré et dans lequel des octets de remplissage inertes sont ajoutés (139) à la XID hybride (109) et l'emplacement des divers composants de la XID hybride (109) sont mélangés ;
sélectionner au moins une règle de validation, parmi une pluralité de règles de validation, pour sélectionner au moins une technique de validation parmi une pluralité de techniques de validation utilisées pour déterminer une authenticité du produit ; et
utiliser l'au moins une technique de validation sélectionnée pour déterminer l'authenticité du produit (108) en fonction de la XID (109) associée au produit (108) ; et
un processeur pour mettre en oeuvre le module.

2. Système de détection de contrefaçon selon la revendication 1, dans lequel le paramètre associé au produit inclut un nom de fabricant de produit, ou un nom de produit, ou une taille de produit, ou une couleur associée au produit, ou une taille associée au produit, ou un prix du produit, ou un emplacement géographique du produit, ou toute combinaison de ceux-ci.

3. Système de détection de contrefaçon selon l'une quelconque des revendications précédentes, comprenant en outre des instructions lisibles par machine pour :
déterminer, en fonction d'au moins une règle de décision de client et serveur, s'il faut valider l'authenticité du produit en utilisant un dispositif mobile ou dans un environnement de serveur ; et mettre à jour, en fonction de l'analyse de date provenant de la détermination d'authenticité du produit, la détermination de valider l'authenticité du produit en utilisant le dispositif mobile ou dans l'environnement de serveur ; et/ou
déterminer, en fonction d'au moins une règle de décision de client et serveur, s'il faut valider l'authenticité du produit en utilisant un dispositif mobile ou dans un environnement de serveur ; et mettre à jour l'au moins une règle de décision de client et serveur en fonction de l'analyse de données provenant de la détermination d'authenticité du produit.

4. Système de détection de contrefaçon selon l'une quelconque des revendications précédentes, dans lequel l'au moins une technique de validation inclut au moins une action parmi :
utiliser le composant non chiffré de la XID avec un dispositif mobile pour déterminer l'authenticité du produit ;
utiliser les composants non chiffré et chiffré de la XID avec le dispositif mobile et un environnement de serveur pour déterminer l'authenticité du produit ;
déterminer l'authenticité du produit en fonction de la détermination d'un format correct de la XID ;
déterminer l'authenticité du produit en fonction d'un emplacement géographique du produit ;
déterminer l'authenticité du produit en fonction de la détermination d'une vente antérieure du produit ;
déterminer l'authenticité du produit en fonction de caractéristiques physiques du produit ; et
déterminer l'authenticité du produit en fonction d'un motif caché sur le produit.

5. Système de détection de contrefaçon selon l'une quelconque des revendications précédentes, dans lequel l'au moins une règle de validation inclut :
utiliser l'au moins une technique de validation sélectionnée en fonction d'une comparaison du paramètre associé au produit à un seuil prédéterminé ; et/ou utiliser l'au moins une technique de validation sélectionnée en fonction d'une détermination du fait que le paramètre associé au produit corresponde à une valeur prédéterminée ; et/ou
utiliser l'au moins une technique de validation sélectionnée en fonction d'une comparaison du paramètre associé au produit à un seuil prédéterminé ; et utiliser l'au moins une technique de validation sélectionnée en fonction d'une détermination du fait que le paramètre associé au produit corresponde à une valeur prédéterminée ; et/ou
utiliser l'au moins une technique de validation sélectionnée en fonction d'une relation commerciale entre deux entités.

6. Système de détection de contrefaçon selon l'une quelconque des revendications précédentes, comprenant en outre des instructions lisibles par machine pour :
mettre à jour l'au moins une règle de validation sélectionnée en fonction de l'analyse de données provenant de la détermination d'authenticité du produit ;
et/ou
mettre à jour l'au moins une règle de validation sélectionnée en fonction d'une comparaison d'un nombre de contrefaçons pour le produit à un seuil prédéterminé, dans lequel le seuil prédéterminé est de préférence basé sur au moins deux paramètres associés au produit.

7. Système de détection de contrefaçon selon l'une quelconque des revendications précédentes, dans lequel l'au moins une technique de validation inclut :
déterminer l'authenticité du produit au niveau d'un dispositif mobile ou au niveau d'un environnement de serveur en fonction d'une probabilité de contrefaçon.

8. Système de détection de contrefaçon selon la revendication 7, comprenant en outre des instructions lisibles par machine pour calculer la probabilité de contrefaçon en fonction d'une évaluation de validations de contrefaçon demandées et de contrefaçons détectées, dans lequel la probabilité de contrefaçon est de préférence basée sur au moins deux paramètres associés au produit.

9. Système de détection de contrefaçon selon l'une quelconque des revendications précédentes, comprenant en outre des instructions lisibles par machine pour stocker des produits contrefaits fréquemment détectés pour une validation d'authenticité en utilisant un dispositif mobile, dans lequel les produits contrefaits fréquemment détectés sont de préférence basés sur la détermination d'un emplacement géographique des produits contrefaits.

10. Procédé de détection de contrefaçon, le procédé comprenant :
déterminer une identification croisée, XID, (109) associée à un produit (108), dans lequel la XID (109) inclut au moins un d'un composant non chiffré et d'un composant chiffré associé à un paramètre associé au produit (108), et dans lequel la XID (109) est une XID hybride et inclut le composant non chiffré concaténé avec le composant chiffré, le composant chiffré étant annexé à la fin du composant non chiffré et dans lequel des octets de remplissage inertes sont ajoutés (139) à la XID hybride (109) et l'emplacement des divers composants de la XID hybride (109) sont mélangés ;
sélectionner au moins une règle de validation, parmi une pluralité de règles de validation, pour sélectionner au moins une technique de validation parmi une pluralité de techniques de validation utilisées pour déterminer une authenticité du produit (108) ; et
utiliser, par un processeur, l'au moins une technique de validation sélectionnée pour déterminer l'authenticité du produit (108) en fonction de la XID (109) associée au produit (108).

11. Procédé selon la revendication 10, comprenant en outre déterminer, en fonction d'au moins une règle de décision de client et serveur, s'il faut valider l'authenticité du produit en utilisant un dispositif mobile ou dans un environnement de serveur ; et mettre à jour, en fonction de l'analyse de données provenant de la détermination d'authenticité du produit, la détermination de valider l'authenticité du produit en utilisant le dispositif mobile ou dans l'environnement de serveur ; et/ou dans lequel l'au moins une règle de validation inclut : utiliser l'au moins une technique de validation sélectionnée en fonction d'une comparaison du paramètre associé au produit à un seuil prédéterminé ; et utiliser l'au moins une technique de validation sélectionnée en fonction d'une détermination du fait que le paramètre associé au produit corresponde à une valeur prédéterminée.

12. Procédé selon la revendication 10 ou 11, comprenant en outre : mettre à jour l'au moins une règle de validation sélectionnée en fonction d'une comparaison d'un nombre de contrefaçons pour le produit à un seuil prédéterminé ; et/ou dans lequel l'au moins une technique de validation inclut déterminer l'authenticité du produit au niveau d'un dispositif mobile ou au niveau d'un environnement de serveur en fonction d'une probabilité de contrefaçon.

13. Produit de programme informatique comprenant des instructions lisibles par ordinateur qui, lors de leur chargement et exécution sur un système approprié, réalisent les étapes d'un procédé selon l'une quelconque des revendications 10 à 12.
